# FASCICULE DE BREVET EUROPEEN

(11) **EP 1 470 714 B1**
(45) Date de publication et mention de la délivrance du brevet: **09.05.2012**
(21) Numéro de dépôt: 03715010.9
(22) Date de dépôt: 15.01.2003
(51) Int. Cl.: H04N 7/167, H04N 7/24, H04N 5/913, H04N 7/16

(54) **DISPOSITIF SECURISE POUR LE TRAITEMENT DES OEUVRES AUDIOVISUELLES DE HAUTE QUALITE**
SICHERES GERÄT FÜR DIE BEARBEITUNG VON AUDIOVISUELLEN DATEN MIT HOHER QUALITÄT
SECURE DEVICE THAT IS USED TO PROCESS HIGH-QUALITY AUDIOVISUAL WORKS

(30) Priorité: 30.01.2002 FR 0201100
(43) Date de publication de la demande: 27.10.2004
(73) Titulaire: NAGRA FRANCE SAS, 75015 Paris (FR)
(72) Inventeur: LECOMTE, Daniel, F-75117 Paris (FR)
(74) Mandataire: Leman Consulting S.A.
(86) Numéro de dépôt international: PCT/FR2003/000123
(87) Numéro de publication internationale: WO 2003/065725

(56) Documents cités:
- EP-A- 0 975 165
- EP-A- 1 011 269
- EP-A- 1 139 660
- WO-A-00/60846
- WO-A-01/67667

## Description

La présente invention concerne le traitement, la diffusion, l'enregistrement et la visualisation sécurisée de données vidéo et de programmes de télévision, ou plus généralement n'importe quel programme ou séquence multimédia utilisant un format de flux nominal de type MPEG, par des utilisateurs autorisés et propose un système sécurisé pour le traitement, la diffusion, la livraison, l'enregistrement, la copie privée et la visualisation de programmes et de séquences vidéo ou multimédia interactifs.

Le problème général est de fournir un dispositif capable de transmettre de façon sécurisée un ensemble de films de haute qualité visuelle à un format de type MPEG (MPEG-1, MPEG-2) en direct vers un écran de télévision et/ou pour être enregistré sur le disque dur d'un boîtier reliant le réseau de télétransmission à l'écran de télévision, tout en préservant la qualité audiovisuelle mais en évitant toute utilisation frauduleuse comme la possibilité de faire des copies pirates de films ou de programmes audiovisuels enregistrés sur le disque dur du boîtier décodeur.

L'invention permet également un contrôle total de l'utilisation des copies et des droits des oeuvres diffusées.

Avec les solutions actuelles, il est possible de transmettre des films et des programmes audiovisuels sous forme numérique via des réseaux de diffusion de type hertzien, câble, satellite, etc. ou via des réseaux de télécommunication type DSL (Digital Subscriber Line) ou BLR (boucle locale radio) ou via des réseaux DAB (Digital Audio Broadcasting). Par ailleurs, pour éviter le piratage des oeuvres ainsi diffusées, ces dernières sont souvent cryptées par divers moyens bien connus de l'homme de l'art.

Toutefois, l'inconvénient principal de toutes les solutions actuelles (TiVo Inc., WO00165762) est qu'il faut transmettre non seulement les données cryptées vers les utilisateurs, mais également les clés de décryptage. La transmission des clés de décryptage pouvant se faire avant, en même temps ou après la transmission des programmes audiovisuels. Pour augmenter la sécurité et donc la protection des oeuvres audiovisuelles contre une utilisation mal intentionnée, les clés de décryptage ainsi que les fonctions de décryptage des décodeurs audiovisuels peuvent comporter des moyens de sécurité améliorés comme des cartes à puces ou autres clés physiques qui peuvent en option, être mises à jour à distance.

Ainsi, les solutions actuelles appliquées à un boîtier décodeur avec possibilité d'enregistrement local de programmes audiovisuels sous forme numérique sur un support quelconque de type disque dur ou autre type de mémoire, offrent à un usager mal intentionné, la possibilité de faire des copies non autorisées des programmes ainsi enregistrés, puisqu'à un moment donné, cet usager possède avec son boîtier décodeur numérique, associé ou pas à des systèmes de cartes à puce, toutes les informations, programmes logiciels et données permettant le décryptage complet des programmes audiovisuels. En raison justement du fait qu'il possède toutes les données, l'usager mal intentionné aura la possibilité de faire des copies illégales sans que personne ne s'aperçoive de cette copie frauduleuse au moment où elle est faite.

Une solution consisterait donc à transmettre tout ou partie d'un programme audiovisuel numérique uniquement à la demande (services de vidéo à la demande) à travers un réseau de télécommunication large bande de type ADSL, câble ou satellite, sans autoriser l'enregistrement local des programmes audiovisuels. Ici, l'inconvénient est tout autre et provient des performances de ces réseaux qui ne permettent pas de garantir des flux continus de quelques mégabits par seconde à chaque usager, comme exigé par les flux MPEG qui nécessitent des bandes passantes de quelques centaines de kilobits à plusieurs mégabits par seconde.

Dans ces conditions, une solution consiste à séparer le flux en deux parties dont aucune ne serait utilisable seule. Dans cette optique plusieurs brevets ont été déposés. Ainsi, on connaît par le document WO09908428 (Gilles Maton) un procédé de traitement multi-applicatif d'un terminal actif localisable dans lequel on réalise au moins une liaison avec un programme identifiable dédié à l'exécution d'une application, ledit programme dictant ses conditions d'exploitation au terminal pour la mise à disposition des fonctions. Le terminal dialogue ponctuellement, par l'emploi d'une liaison, avec le centre de gestion pour la réalisation, si nécessaire, des entrées et sorties des capacités de ce dernier, le centre de gestion devenant esclave ou non du terminal au niveau de l'applicatif vis-à-vis du programme entrant. Cette invention concerne également le procédé d'identification du programme et du terminal en exploitation. Ce procédé de l'art antérieur divise le flux en une partie servant à identifier l'utilisateur et une partie qui contient le programme à proprement parler. En particulier, ledit programme n'est pas inutilisable mais seulement verrouillé par la première partie.

D'autre part, le document EP0778513 (Matsushita) décrit un procédé permettant de prévenir l'utilisation illégale d'une information en y ajoutant une information de contrôle afin de vérifier les droits de l'utilisateur. Le système permet de savoir en permanence quelle partie de l'information est utilisée et par quel utilisateur et par là de savoir si cet utilisateur est en position illégale ou pas. Ce procédé sécurise donc les données en y ajoutant des informations additionnelles qui dénaturent l'information initiale.

Le document WO0049483 (Netquartz) nous offre également des procédés et des systèmes pour créer un lien entre les utilisateurs et un éditeur d'entités numérisées. Le procédé comprend l'une au moins des étapes suivantes : l'étape de subdiviser ladite entité numérisée en deux parties ; l'étape de mémoriser une partie dans une zone mémoire d'un serveur connecté à un réseau informatique ; l'étape de transmettre l'autre partie à au moins un utilisateur disposant d'un équipement informatique ; l'étape de connecter ledit équipement informatique audit réseau informatique ; l'étape d'établir un lien fonctionnel entre ladite première partie et ladite deuxième partie. Ces procédés et systèmes ne spécifient pas si la partie mémorisée sur le serveur peut être stockée par l'utilisateur ce qui permettrait à celui-ci de pirater ladite entité numérisée.

Enfin, dans cette approche, l'état de la technique le plus proche se retrouve dans les brevets d'HyperLOCK Technologies dont le plus pertinent est le document US05937164. Cette invention utilise la solution qui consiste à séparer le flux en deux parties dont la plus petite détient une information nécessaire à l'utilisation de la plus grande. Cependant, ce brevet n'est pas suffisant pour répondre au problème identifié. En effet, la suppression d'une partie du flux dénature le format du flux, et ne peut donc pas être reconnu comme un flux standard, exploitable avec des applications logicielles générales. Ce procédé de l'art antérieur nécessite à la fois un logiciel spécifique côté serveur, pour la séparation des deux parties, et un autre logiciel spécifique assurant non seulement la reconstruction du flux, mais également l'acquisition du flux principal et son exploitation selon un format propriétaire à la solution. Ce format propriétaire n'est pas le format initial du flux avant séparation en deux parties, dans cette solution connue.

Cette société a également déposé trois autres brevets : le document US5892825 reprend le brevet précédent mais dans un cadre moins large car les flux y sont toujours cryptés ; le document US6035329 repose sur le même principe, il concerne un procédé permettant la lecture d'un disque de type CD-ROM ou DVD-ROM conditionnellement à l'identification des droits par l'insertion d'une carte à puce sur laquelle les informations nécessaires à la lecture sont stockées. Ce procédé n'est encore pas suffisant pour notre problème car il ne garantit pas que le flux modifié soit du même format que le flux originel. Enfin, le document US6185306 concerne un procédé de transmission de données cryptées depuis un site Web vers un ordinateur demandeur. Ce procédé permet cependant à l'utilisateur de disposer à un moment donné de tous les outils nécessaires pour copier les données.

L'art antérieur connaît également, par la demande de brevet européen EP 1 011 269 (Mindport), un système de traitement d'un signal d'information. Ce document a pour objet d'empêcher la distribution illicite de copies compressées de flux d'information, notamment audio, vidéo et image. Généralement, les systèmes de protection de flux d'information classiques s'appuient sur un cryptage ou brouillage effectué sur une copie déjà compressée et formatée du flux (par exemple cryptage des DVD déjà compressées...). Ainsi, le contenu décrypté du flux pour ces systèmes de protection « classiques » est sous forme décompressée et donc directement exploitable et distribuable. La présente invention consiste à commencer par crypter ou brouiller le flux, puis à le compresser (au lieu de le compresser d'abord puis le brouiller). Pour se faire, l'invention comprend une analyse de l'entropie du flux qui permet de brouiller le flux non compressé tout en conservant son entropie. Conserver son entropie permet d'atteindre la même efficacité de compression pour le flux. Le brouillage consiste à ajouter un bruit (de type bruit blanc pseudo aléatoire) au signal. Ce bruit est généré à l'aide d'une clé d'embrouillage. Cette clé est alors cryptée pour un utilisateur unique via un système clé publique - clé privée, la clé privée utilisée étant spécifique au système de désembrouillage du client visé. La clé d'embrouillage ainsi cryptée est envoyée au client possédant les droits de visionnage en même temps que le flux protégé. Côté client, le flux est décompressé, puis un signal de désembrouillage lui est ajouté (soustrait) qui est obtenu grâce à l'utilisation de la calé de désembrouillage fournie au client. Dans le cas de la vidéo, la présente invention s'applique sur les coefficients DCT de chaque bloc de chaque image, avant leur compression (par VLC...). On ne brouille pas que les images I car sinon, les autres images du flux MPEG corrigeraient les images suivantes, il faut donc brouiller toutes les images. Dans le cas d'un DVD par exemple, lors de la location, le point de vente donne au client une disquette (ou autre) contenant la clé de désembrouillage correspondant au client.

L'art antérieur connaît également, par la demande de brevet européen EP 0 975 165 (Sony), un appareil et un procédé pour transmettre d'un émétteur à un récepteur des signaux dont l'accès est contrôlé. Ce document concerne la gestion des droits de copie et visionnage d'un flux vidéo. Elle permet la transmission par deux voies séparées deux flux contenant la vidéo et les informations de contrôle d'accès. Le flux vidéo reçu dans le dispositif client est, dans une première réalisation, descramblé, puis encrypté ou non par un système à base de clés publique et privée. Si l'utilisateur a tous les droits sur le film, il peut le copier à volonté et le regarder comme il le souhaite. Si il n'a les droits que pour un ou quelques visionnages, le flux copié sur l'équipement client sur une cassette ou un CD ou... aura été préalablement encrypté. Lorsque le flux en question est visionné, il est décrypté par un décrypteur inclus dans l'équipement client. Si l'utilisateur n'a plus les droits, le flux crypté qu'il a copié ou qu'il est en train de lire n'est pas décrypté car le module de contrôle d'accès n'autorise pas le décryptage. Les contrôles d'accès du client sont gérés et traités par un module de contrôle d'accès interne à l'équipement client. Les données de contrôle d'accès sont sauvegardés sur la cassette ou CD / DVD sur lequel la vidéo est enregistrée. Elles peuvent de plus être téléchargées. Dans une autre réalisation, le même procédé est utilisé mais le module de contrôle d'accès ne contrôle non pas un couple crypteur / décrypteur intégré dans l'équipement client, mais le descrambler qui descramble le flux vidéo reçu par le serveur vidéo.

L'art antérieur connaît également, par la demande de brevet PCT W0 00 60846 (Diva Systems), une solution de distribution de Video On Demand via un système de serveurs répartis. La protection du contenu de la vidéo numérique s'appuyant sur un système à base de clés publique / privée. La principale innovation de ce brevet est de permettre un encryptage et un décryptage des flux MPEG-TS simplifiés. Le temps de calcul est en effet fortement diminué grâce à une analyse du flux MPEG-TS qui permet de ne crypter que certaines parties du contenu. Cette analyse du flux consiste principalement à marquer les paquets TS contenant une information essentielle au bon décodage (au sens MPEG) de la vidéo, de façon à ce que dans une deuxième phase de cryptage, seules les payloads des paquets TS marqués ne soient cryptés. Ainsi, l'information essentielle n'est pas disponible pour le décodage et le flux ne peut donc pas être affiché tout en conservant un temps de calcul raisonnable pour le cryptage. Il faut ensuite transmettre dans le flux l'information permettant au décrypteur de savoir si la payload d'un paquet est cryptée ou non, cela peut se faire de plusieurs manières comme par exemple l'ajout d'une info avant le byte de synchronisation ou par la modification du bit de scrambling control ou d'une info du champ d'adaptation. Les paquets ainsi générés ne sont pas parfaitement conformes à la norme.

Afin de corriger les différents défauts de l'art antérieur, l'invention concerne selon son acception la plus générale un procédé pour la distribution de séquences vidéos selon un format de flux nominal constitués par une succession de trames [frame] comprenant chacune au moins un bloc I correspondant à une image numérique complète I, chaque image I étant décomposée en blocs et macroblocs dépendant les uns des autres par des coefficients de corrélation, caractérisé en ce que l'on procède, avant la transmission à l'équipement client, à une analyse du flux pour générer un premier flux modifié, présentant le format d'un flux nominal, et présentant des images I modifiées par la substitution de certains coefficients de corrélation par des coefficients de même nature mais aléatoires, et un deuxième flux d'un format quelconque, comportant les coefficients de corrélation substitués et informations numériques aptes à permettre la reconstruction desdites images modifiées, puis à transmettre séparément les deux flux ainsi générés depuis le serveur vers l'équipement destinataire, et en ce que l'on calcule sur l'équipement destinataire une synthèse d'un flux au format nominal en fonction dudit premier flux et dudit deuxième flux.

Avantageusement, ladite synthèse produit un flux rigoureusement identique au flux originel, c'est-à-dire que le procédé est sans perte.

Selon une variante particulière de ce procédé, le format de flux nominal est défini par les normes MPEG (MPEG-1, MPEG-2, etc.).

Avantageusement, ladite analyse peut décider des images I et des coefficients de corrélation à modifier pour obtenir ledit premier flux ; ces modifications peuvent être : remplacer des coefficients de corrélation d'une image I par des coefficients de corrélation d'une autre image I, intervertir deux coefficients de corrélation d'une même image I, intervertir deux coefficients de corrélation de deux images I du même flux, remplacer des coefficients de corrélation d'une image I par des valeurs aléatoires.

Avantageusement, la séquence vidéo selon un format de flux nominal est constituée par une succession de trames [frame] comprenant chacune au moins un bloc **I** correspondant à une image numérique complète I et au moins un bloc P correspondant aux différences entre une image P et au moins une autre image I et/ou P. Dans ce cas, ladite analyse peut décider des images P à modifier en plus ou à la place des images I pour obtenir ledit premier flux ; Les modifications apportées alors aux images P sont du même type que celles apportées aux images I, à savoir la modification des coefficients de corrélation.

Dans une mise en oeuvre particulière de ce procédé, la transmission dudit premier flux est réalisée à travers un support matériel distribué physiquement comme un CD-ROM, un DVD, un disque dur ou une carte à mémoire de type mémoire flash par exemple.

Dans une autre mise en oeuvre de ce procédé, la transmission dudit premier flux est réalisée à travers un réseau large bande (câble, satellite, fibre optique, hertzien, DSL, DAB).

Selon la mise en oeuvre de ce procédé, la transmission dudit deuxième flux est réalisée à travers un réseau câblé, à travers un réseau téléphonique commuté (RTC analogique ou numérique), à travers un réseau téléphonique mobile utilisant les normes GSM, GPRS ou UMTS, à travers un réseau BLR. (boucle locale radio) ou à travers un réseau de type DSL.

Selon une variante particulière de ce procédé, la transmission dudit deuxième flux est réalisée à travers un réseau large bande de même type que le réseau utilisé par ledit premier flux, voire à travers le même réseau.

Selon une variante particulière de ce procédé, la transmission dudit deuxième flux est réalisée au moyen d'une carte mémoire de type mémoire flash ou au moyen d'une carte à puce.

Avantageusement, la transmission d'un des deux flux ou des deux flux est chiffrée.

Avantageusement, un des deux flux ou les deux flux est tatoué par des techniques classiques de « watermarking ». Le « watermarking », appelé aussi filigrane numérique ou tatouage numérique, est une technique de marquage de contenu visuel ou sonore, numérique tel que des images, des flux vidéo ou des flux audio. La technique consiste en un traitement du contenu de manière à insérer des informations dans le contenu. En général, les informations insérées sont invisibles lors de la vision du contenu mais peuvent être retrouvées en appliquant des traitements audit contenu. Deux types de filigranes existent :
- le filigrane fragile : les informations insérées sont affectées par une modification du contenu : ce type de filigrane est utilisé pour détecter si le contenu a été modifié ;
- le filigrane robuste : les informations insérées sont conservées même si le contenu est modifié ; ce type de filigrane est par exemple utilisé pour associer des droits d'auteur à une oeuvre.

Selon la mise en oeuvre de ce procédé, les deux flux générés peuvent être destinés à un seul équipement, à un groupe d'équipement ou à tous les équipements.

Selon un mode de réalisation particulier, la reconstruction et par conséquent la visualisation, est conditionnée par une transaction entre l'équipement et le portail comme le paiement, l'inscription dans un registre d'abonnement, etc...

La reconstruction peut également être autorisée pour une consultation d'une copie privée demandée par le client.

De manière générale, le fait que la reconstruction soit conditionnée à l'autorisation du portail permet à tout opérateur du service de gérer tous les droits attachés aux oeuvres audiovisuelles.

De plus, l'invention concerne un équipement pour la fabrication d'un flux vidéo en vue de la mise en oeuvre de ce procédé comportant au moins un serveur multimédia contenant les séquences vidéos originelles et caractérisé en ce qu'il comporte un dispositif d'analyse du flux vidéo provenant dudit serveur pour générer les deux flux.

Avantageusement, cet équipement comporte une mémoire pour l'enregistrement d'un marqueur « copie privée » indiquant pour chaque séquence les droits de chaque utilisateur : copie privée pouvant être regardée un nombre illimité de fois, copie privée pouvant être regardée un nombre limité de fois et quel nombre, copie privée interdite.

En outre, l'invention concerne un équipement pour l'exploitation d'un flux vidéo en vue de la mise en oeuvre de ce procédé comprenant un décodeur standard de flux, au moins une interface d'enregistrement (disque dur, mémoire type mémoire flash) destiné à stocker le contenu dudit premier flux et/ou un lecteur de disques (CD, DVD, etc.) et au moins une interface d'affichage (écran standard, écran sans fil, vidéoprojecteur) caractérisé en ce qu'il comporte un moyen pour la recomposition du flux originel à partir des deux flux.

Selon un mode de réalisation particulier, ledit moyen est une application logicielle installée sur l'équipement.

Selon un autre mode de réalisation, ledit moyen est un dispositif électronique fixe.

Selon un autre mode de réalisation, ledit moyen est un dispositif électronique portable (mobile) avec son écran incorporé.

Selon un mode de réalisation où l'équipement est installé sur un ordinateur, ledit moyen utilise une ressource spécifique au produit (carte) afin d'éviter la copie de l'information temporaire du deuxième flux sur un support permanent.

Avantageusement, ladite interface d'enregistrement stocke aussi un marqueur « copie privée » en relation avec ledit premier flux indiquant pour cette séquence les droits de l'utilisateur : copie privée pouvant être regardée un nombre illimité de fois, copie privée pouvant être regardée un nombre limité de fois et quel nombre, copie privée interdite.

Avantageusement, l'équipement comprend un lecteur de cartes à puce permettant d'identifier l'usager.

Avantageusement, l'équipement comprend un lecteur de cartes à puce, la carte à puce contenant les applications logicielles.

Avantageusement, l'équipement comprend un lecteur de cartes à puce, la carte à puce contenant les données dudit deuxième flux pour un contenu donné.

Enfin, l'invention concerne un système pour la transmission d'un flux vidéo caractérisé en ce qu'il comprend un équipement de production d'un flux vidéo, au moins un équipement d'exploitation d'un flux vidéo et au moins un réseau de communication entre l'équipement de production et le(s) équipement(s) d'exploitation.

La présente invention sera mieux comprise à la lecture de la description d'un exemple non limitatif de réalisation qui suit, se référant aux dessins annexés où :
- la figure 1 décrit l'architecture d'ensemble d'un système pour la mise en oeuvre du procédé selon l'invention
- la figure 2 représente un mode de réalisation particulier du système d'analyse et de synthèse de flux de type MPEG conforme à l'invention
- la figure 3 représente un mode de réalisation particulier du système de synthèse de flux conforme à l'invention.

L'invention concerne un flux de données d'un format nominal, notamment mais non exclusivement un flux de type MPEG (MPEG-1, MPEG-2). Le format du flux audiovisuel utilisé doit avoir les caractéristiques suivantes :
- ce format doit décomposer les données en trames [frame], chaque trame comprenant une image numérique I complète ;
- chaque image I se décompose en macroblocs d'une taille donnée, lesdits macroblocs se décomposant eux-mêmes en blocs d'une taille donnée ;
- chaque image I contient des coefficients de corrélation entre les différents blocs et/ou macroblocs des images I.

Dans la description qui suit, l'exemple concerne un flux MPEG-1 sans que cela ne constitue une limitation de la portée de la protection.

Le principe général d'un procédé de sécurisation d'un flux vidéo est exposé ci-après. L'objectif est d'autoriser les services de vidéo à la demande et à la carte à travers tous ces réseaux de diffusion et l'enregistrement local dans le boîtier décodeur numérique de l'usager. La solution consiste à conserver en permanence à l'extérieur de l'habitation de l'usager, en fait dans le réseau de diffusion et de transmission, une partie du programme audiovisuel enregistré, cette partie étant primordiale pour visualiser ledit programme audiovisuel sur un écran de télévision ou de type moniteur, mais étant d'un volume très faible par rapport au volume total du programme audiovisuel numérique enregistré chez l'usager. La partie manquante sera transmise via le réseau de diffusion transmission au moment de la visualisation dudit programme audiovisuel numérique préenregistré chez l'usager.

La plus grande partie du flux audiovisuel sera donc transmise via un réseau de diffusion classique alors que la partie manquante sera envoyée à la demande via un réseau de télécommunication bande étroite comme les réseaux téléphoniques classiques ou les réseaux cellulaires de type GSM, GPRS ou UMTS ou en utilisant une petite partie d'un réseau de type DSL ou BLR, ou encore en utilisant un sous-ensemble de la bande passante partagée sur un réseau câblé.

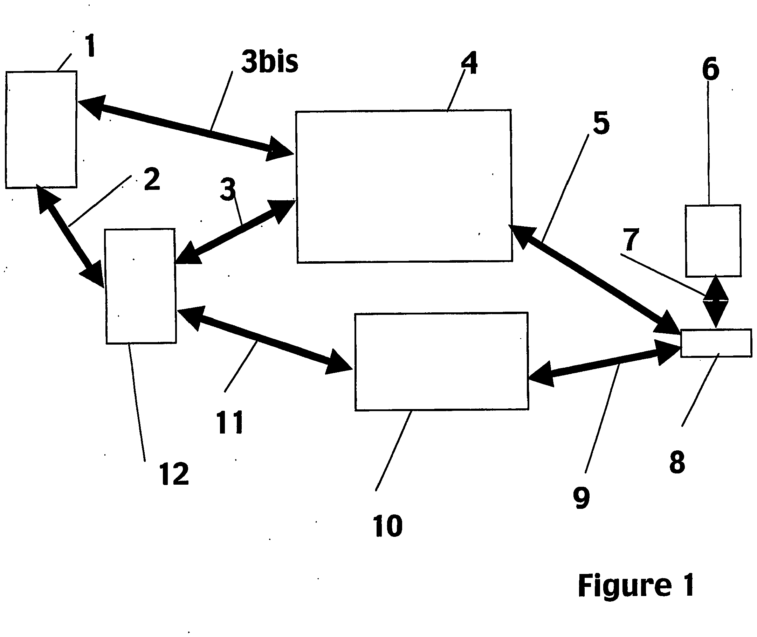

Sur le dessin en annexe, la figure 1 est un schéma de principe d'un système de distribution selon la présente invention.

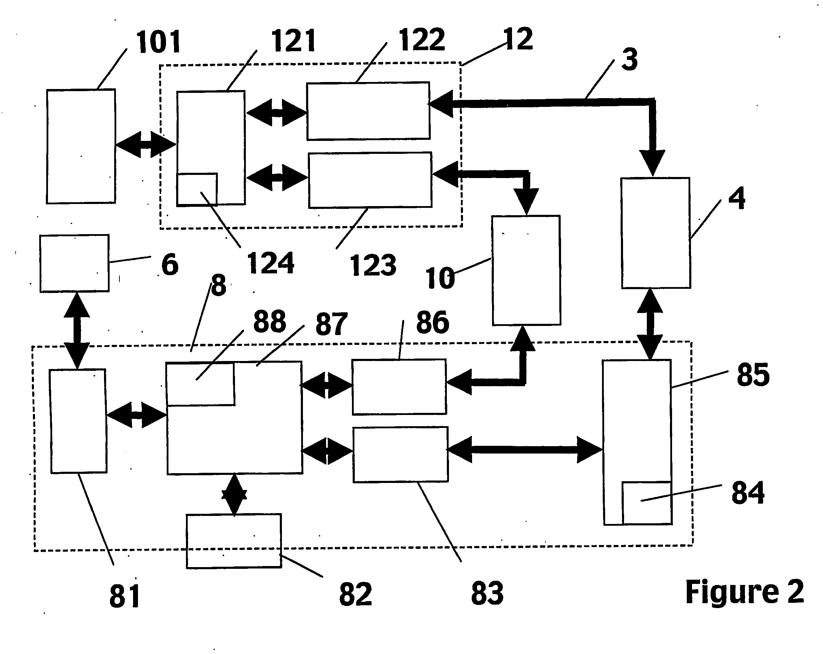

La figure 2 représente un mode de réalisation particulier du système d'analyse et de synthèse de flux conforme à l'invention.

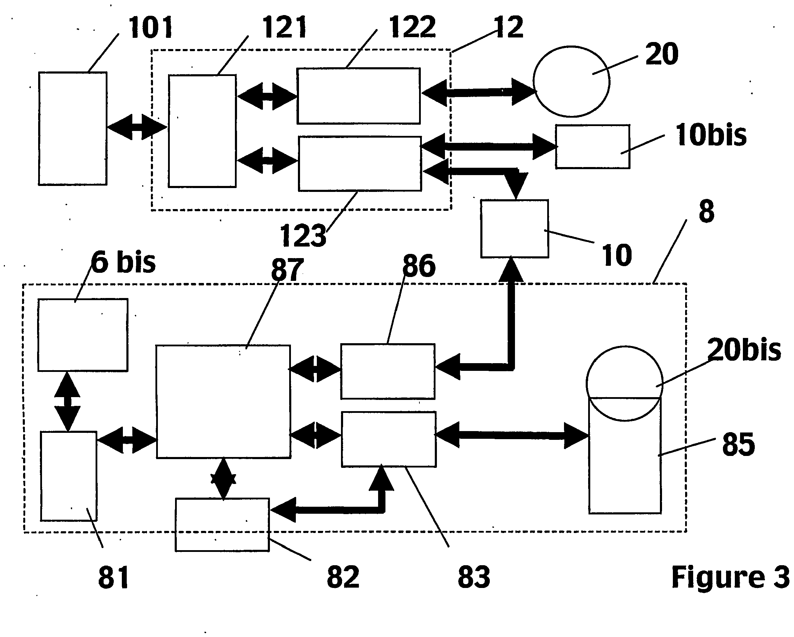

La figure 3 représente un mode de réalisation particulier du système de synthèse de flux conforme à l'invention.

Sur la figure 1, l'agencement d'interfaçage vidéo (8) est adapté pour relier au moins un dispositif d'affichage, par exemple un moniteur, un vidéo projecteur ou un dispositif de type écran de télévision (6), à au moins une interface de réseau de transmission et de diffusion large bande (4) et à au moins une interface de réseau de télécommunication (10). Selon la présente invention, cet agencement est composé d'un module (8) comprenant principalement, d'une part, une unité de traitement adaptée pour traiter, en particulier décoder et désembrouiller tout flux vidéo de type MPEG selon un programme logiciel de décodage et désembrouillage pré-chargé, de manière à l'afficher, en temps réel ou différé, de le stocker, de l'enregistrer et/ou de l'envoyer sur un réseau de télécommunication et, d'autre part, au moins une interface d'écran (7) et une interface de connexion à un réseau local ou étendu (5) et/ou (9). Le réseau de transmission et de diffusion large bande (4) et le réseau de télécommunication (10) pouvant être confondus en un seul réseau.

Le disque dur du module (8) peut être utilisé comme mémoire tampon pour stocker momentanément au moins une partie du programme ou de la séquence vidéo à afficher, en cas de visualisation différée ou de limitation dans la bande passante du réseau de transmission. La visualisation peut être retardée ou différée à la demande de l'utilisateur ou du portail (12).

Comme le montre la figure 1, l'interface de connexion (5) est reliée à un réseau de transmission et de diffusion large bande (4) telle qu'un modem, un modem satellite, un modem câblé, d'une interface de ligne à fibre optique ou d'une interface radio ou infrarouge pour la communication sans-fil.

C'est par cette liaison classique de diffusion vidéo que seront transmis les contenus des programmes audiovisuels comme des films. Toutefois, de façon à ne pas laisser faire de copies pirates, avant de transmettre le contenu audiovisuel depuis le serveur (1) ou le portail (12) il est prévu de conserver une petite partie du contenu audiovisuel dans le portail (12).

En cas de visualisation d'un programme audiovisuel en temps réel, cette petite partie du contenu audiovisuel conservée dans le portail (12) sera également envoyée au module (8) via le réseau de télécommunication (10).

Comme les images successives d'une séquence vidéo comportent un grand nombre d'éléments visuels identiques (comme en cinéma, une image ressemble à la précédente), MPEG n'enregistre que les éléments qui diffèrent de l'image d'origine. On modifiera donc une image entière de référence en conservant les coefficients DC des modifications apportées dans le portail (12) et, pour les images successives qui dépendent de cette image I de référence, il n'est pas nécessaire d'apporter des modifications puisqu'elles feront diverger le flux visualisé en raison des perturbations apportées aux images I de référence. La compression MPEG commence donc, dans un premier temps, par décomposer l'image en différentes matrices carrées comportant plusieurs points ou pixels, ayant chacun leur propre valeur colorimétrique. Un calcul permet d'obtenir une valeur moyenne pour chaque matrice au sein de laquelle chaque point est maintenant noyé. Ce traitement génère une pixélisation et l'apparition d'aplats uniformes, là où existaient des nuances de teinte. La deuxième étape de la compression MPEG consiste à ne conserver d'une image à l'autre que les éléments changeants.

Pour obtenir des images animées de type MPEG-1 ou MPEG-2, le principe consiste à capter quelques images dans le temps, les images intermédiaires étant calculées à partir de celles-ci. L'analyse des images de référence complètes (dites I pour Intra-frame) permet de prédire des images intermédiaires P (Predicted frames). Ensuite, on intercale entre images de référence et images prédites, des images B (Bidirectional Frame).

La vidéo est représentée comme une succession d'images individuelles, dont chacune est traitée comme une matrice bi dimensionnelle d'éléments d'image (pixels). La représentation des couleurs de chaque pixel comprend trois composantes : une composante de luminance Y et deux composantes de chrominance, Cb et Cr.

La compression de la vidéo numérisée est réalisée par l'utilisation de plusieurs techniques : sous échantillonnage d'informations de chrominance pour s'adapter à la sensibilité du système visuel humain (HVS), quantification, compensation du mouvement (MC) pour exploiter la redondance temporelle, transformation dans le domaine fréquentiel par la transformation en cosinus discrète (DCT) pour exploiter la redondance spatiale, codage à longueur variable (VLC) et interpolation d'images.

Le système visuel humain (HVS) étant le plus sensible à la résolution de la composante de luminance d'une image, les valeurs de pixel Y sont codées à pleine résolution. Le système visuel humain est moins sensible aux informations de chrominance. Le sous-échantillonnage élimine les valeurs de pixels basées systématiquement sur la position, ce qui réduit la quantité d'informations à comprimer par d'autres techniques. La norme conserve un ensemble de pixels de chrominance pour chaque voisinage 2x2 de pixels de luminance.

L'unité de codage de base d'une image est le macrobloc. Les macroblocs de chaque image sont codés successivement, de gauche à droite, et de haut en bas. Chaque macrobloc est composé de 6 blocs 8x8: quatre blocs de luminance Y, un bloc de chrominance Cb et un bloc de chrominance Cr. A noter que les quatre blocs de luminance couvrent la même zone de l'image que chacun des blocs de chrominance, du fait du sous-échantillonnage des informations de chrominance, effectué pour adapter le codage à la sensibilité du système visuel humain.

Pour un macrobloc donné, la première opération est le choix du mode de codage qui dépend du type d'image, de l'efficacité de la prédiction compensée en mouvement dans la région codée, et de la nature du signal contenu dans le bloc. Deuxièmement, une prédiction compensée en mouvement du contenu du bloc, basée sur des images de référence antérieure ou future est formée. Cette prédiction est soustraite des données réelles du macrobloc courant, pour former un signal d'erreur. Troisièmement, ce signal d'erreur est divisé en 6 blocs 8x8 (4 blocs de luminance et 2 blocs de chrominance dans chaque macrobloc) à chacun desquels est appliquée une transformation en cosinus discrète. Le bloc 8x8 de coefficients DCT résultant est quantifié. Le bloc à deux dimensions qui en résulte est balayé en zigzag pour être converti en une chaîne unidimensionnelle de coefficients DCT quantifiés. Quatrièmement, les informations annexes du macrobloc (type, vecteurs, etc.) ainsi que les données des coefficients quantifiés sont codées. Pour obtenir une efficacité maximale, un certain nombre de tables de codage à longueur variable sont définies pour les différents éléments de données. Un codage des longueurs de plage est appliqué aux données des coefficients quantifiés.

Le coefficient DCT du point (0,0) supérieur gauche du bloc représente une fréquence horizontale et verticale nulle : il est appelé coefficient DC (continu). Le coefficient DC étant proportionnel à la valeur moyenne des pixels du bloc 8x8, le codage prédictif permet une compression supplémentaire, car la différence des valeurs moyennes des blocs 8x8 voisins tend à être relativement petite. Les autres coefficients représentent une ou plusieurs fréquences spatiales horizontales et/ou verticales non nulles et sont appelés coefficients AC. Pour que le niveau de quantification des coefficients correspondant aux fréquences spatiales élevées favorise la création d'un coefficient nul, on choisit un pas de quantification tel que le système visuel humain (VHS) ait peu de chance de percevoir la perte de la fréquence spatiale concernée, sauf si la valeur du coefficient se trouve au-dessus de ce niveau de quantification. Le codage statistique des plages prévues de coefficients d'ordre élevé consécutifs de valeur nulle, contribue considérablement au gain de compression. Pour regrouper les coefficients non nuls au début de la série et pour coder autant de coefficients nuls que possible à la suite du dernier coefficient non nul, leur séquence est donnée par un balayage en zigzag qui concentre les fréquences spatiales élevées à la fin des séries.

Le codage à longueur variable (VLC) est une technique de codage statistique qui affecte des mots de code aux valeurs à coder. Des mots de code courts sont affectés aux valeurs de fréquence d'occurrence élevée, et des mots de code longs à celles d'occurrence peu fréquente. En moyenne, les mots de code courts plus fréquents sont majoritaires, de sorte que la chaîne codée est plus courte que les données d'origine.

L'invention consiste à utiliser la corrélation entre les coefficients DC dans une image I, afin de pouvoir manipuler l'aspect et la validité visuelle de la séquence à laquelle appartient l'image I en question.

En effet, étant donné que les images I sont les porteurs principaux d'information dans une séquence MPEG, toute modification importante affectant ces images I aura nécessairement un impact sur la validité de la séquence.

Ainsi, la possibilité d'obtenir des dégradations importantes des images I sans effectuer de manipulations compliquées est offerte par la corrélation entre les coefficients DC dans cette image I. Ces coefficients, étant fortement dépendants les uns des autres, déterminent dans une grande partie la valeur des coefficients de la même nature qui suivent. C'est ainsi que, en modifiant l'information qui y est contenue, on modifie profondément les images I et par conséquent toute la séquence MPEG qui suit cette image I.

Chaque macrobloc d'une image I contient six blocs, chacun d'entre eux commençant par un coefficient DC. Quatre blocs correspondent à la luminance (Y), et deux à la chrominance (C) du macrobloc. La valeur écrite dans un fichier du flux MPEG représentant un coefficient DC est en effet la différence entre la vraie valeur de ce coefficient et celle du coefficient correspondant qui précède et qui, pour les blocs Y, peut se trouver dans le même macrobloc ou dans le macrobloc précédent, tandis que pour les blocs C il se trouve toujours dans le macrobloc précédent. Une modification de l'une de ces différences entraînera automatiquement une modification d'information dans tous les macroblocs qui suivent.

Cette méthode est optimale pour la dégradation visuelle du flux MPEG en utilisant les coefficients DC des blocs, mais elle peut être appliquée également aux coefficients AC. Il est ainsi envisageable de modifier certains de ces coefficients AC de manière aléatoire, de transmettre par ledit deuxième flux quels coefficients ont été modifiés et quelle est leur vraie valeur et de reconstituer le flux originel grâce à ces informations. La suite est développée en utilisant les coefficients DC mais il est convenu que toute la suite est applicable aux coefficients AC.

Lorsqu'il lit le train binaire, un décodeur classique MPEG identifie le début d'une image codée, puis le type de l'image. Pour éviter toute confusion entre un boîtier décodeur standard souvent appelé « Set Top Box ou STB », le décodeur standard MPEG sera appelé « Lecteur » (« Player » ou « Viewer ») dans la suite du document. Ce Lecteur peut être réalisé en hardware et/ou en software. Le lecteur MPEG décode successivement chaque macrobloc de l'image. L'image est reconstruite quand tous ses macroblocs ont été traités. S'il s'agit d'une image I, elle constitue une image de référence pour les images subséquentes et elle est stockée à la place de l'image de référence la plus ancienne. Les images sont ainsi disponibles, sous forme numérique, pour post-traitement et affichage, au gré de l'application.

Dans le cas d'un programme audiovisuel de type MPEG, toutes les caractéristiques des images I en provenance du serveur (1) ou du portail (12) ne sont pas transmises vers le module (8). En particulier, les caractéristiques conformes à l'invention sont les coefficients de corrélation DC contenus dans les images I.

Certains coefficients DC de ces images I sont conservés dans le portail (12). Par contre, en lieu et place des coefficients DC de ces images I non transmis, le dispositif conforme à l'invention intercalera de faux coefficients DC de même nature que les coefficients DC enlevés et conservés dans le portail (12) de sorte que le Lecteur standard MPEG du module (8) ne soit pas perturbé par ces modifications qu'il ignorera et reconstituera en sortie un flux de sortie MPEG qui sera non correct du point de vue visuel pour un être humain mais correct du point de vue format MPEG.

Le Lecteur MPEG du boîtier (8) est un Lecteur standard MPEG et n'est en aucune manière modifié ou affecté par les changements apportés aux images I.

Comme le montre la figure 1, l'interface de connexion (9) est reliée à un réseau de télécommunication étendu (10), directement ou par un réseau local servant de réseau d'accès et est constitué par exemple d'une interface de ligne d'abonné (Réseau téléphonique analogique ou numérique, DSL, BLR, GSM, GPRS, UMTS, etc).

Ainsi donc, les programmes audiovisuels sont diffusés de façon classique en mode multidiffusion (« broadcast ») via le réseau de transmission large bande (4) de type hertzien, câble, satellite, numérique hertzien, DSL, etc. depuis le serveur (1) directement via la liaison (3bis) ou via le portail (12) via la liaison (2) et (3) vers le module décodeur (8) à travers la liaison (5). Chaque programme audiovisuel ainsi diffusé peut être crypté ou non, et, conformément à la présente invention, les flux de type MPEG comportent des modifications au niveau de certaines images I comme décrit ci-dessus. En fonction des paramètres choisis par l'usager ou des informations transmises par le serveur de diffusion, certains programmes audiovisuels ainsi modifiés et incomplets sont enregistrés dans le disque dur du boîtier (8).

Lorsque l'usager désire visualiser un programme audiovisuel ainsi enregistré dans le disque dur de son boîtier (8) il en fait la demande de façon classique au moyen d'une télécommande relié à son boîtier (8) qui se connecte alors automatiquement au portail (12) via la liaison (9) de type réseau local ou accès direct et à travers le réseau de télécommunication (10) lui-même relié au portail (12) via la liaison (11). Tout au long de la visualisation du programme audiovisuel, les liaisons (9) et (11) restent établies et permettent au boîtier (8) de recevoir les fonctions et les paramètres de remise en ordre des coefficients DC modifiés des images I. Les coefficients DC modifiés des images I ainsi transmis ne sont jamais enregistrés dans le disque dur du boîtier (8) car les images I reconstituées sont directement affichées sur l'écran de visualisation (6) via la liaison (7) après avoir été traitées par le Lecteur du boîtier (8) à partir de sa mémoire locale volatile. Une fois traités et visualisés, les coefficients DC modifiés et/ou manquants des images I venant d'être transmis par le portail (12) seront effacés de la mémoire volatile locale du boîtier (8).

Selon un mode de réalisation particulier, les coefficients DC modifiés des images I ainsi diffusées peuvent être cryptés ou non, par tout moyen de cryptage existant ou à venir. Il en est de même pour les algorithmes, les fonctions et les paramètres de remise en ordre des coefficients DC modifiés des images I.

A chaque fois que l'usager voudra regarder un programme enregistré dans le disque dur du boîtier (8) le boîtier (8) se connectera automatiquement vers le portail (12). De même lorsque l'usager fera une pause, la transmission des coefficients DC modifiés des images I en provenance du portail (12) sera interrompue jusqu'à la reprise de la visualisation, garantissant ainsi que toutes les informations d'un programme audiovisuel ne se retrouvent dans le boîtier (8) à un moment donné et évitant ainsi à une personne mal intentionnée de faire des copies pirates de ces enregistrements.

Selon un mode de réalisation particulier, le boîtier (8) comprend un lecteur de cartes à puce qui permettra au portail (12) d'authentifier l'usager propriétaire du boîtier (8).

Selon un mode de réalisation particulier, pour un contenu MPEG donné, la carte à puce contient ledit deuxième flux qui a été mémorisé par le portail (12).

Si cela est autorisé, la carte à puce permet également à l'usager d'effectuer des copies privées des programmes audiovisuels enregistrés sur le disque dur de son boîtier décodeur (8). Pour cela, si l'usager veut faire une copie privée d'un programme audiovisuel, il le fera de façon classique sur un magnétoscope via la liaison (7) qui relie le boîtier (8) à l'écran de visualisation (6).

Toutefois, s'il désire conserver une copie privée dans le disque dur de son boîtier, il l'indiquera à son boîtier (8) qui enregistrera l'information « copie privée » ainsi que les coordonnées de l'usager se trouvant sur la carte à puce, dans un champ particulier (84) de ce programme audiovisuel enregistré sur le disque dur (85) du boîtier décodeur (8). Ensuite, chaque fois que l'usager voudra visionner cette copie privée, le boîtier (8) se connectera automatiquement au portail (12) et indiquera à ce dernier que l'usager veut faire une lecture de sa copie privée ; en retour, si la lecture de la copie privée est possible pour cet usager qui possède cette carte à puce reliée à ce boîtier (8), le boîtier décodeur (8) recevra alors les coefficients DC modifiés et/ou manquants des images I ainsi que toutes les autres informations permettant la visualisation du programme audiovisuel constituant la copie privée.

Selon un autre mode de réalisation, si l'usager désire conserver une copie privée dans le disque dur de son boîtier, il l'indiquera au serveur qui enregistrera dans la mémoire copie privée (124) du portail (12) l'information « copie privée » pour ce programme et pour cet utilisateur, authentifié par la carte à puce. Ensuite, chaque fois que l'usager voudra visionner cette copie privée, le boîtier (8) se connectera automatiquement au portail (12) et indiquera à ce dernier que l'usager veut faire une lecture de sa copie privée ; en retour, si la lecture de la copie privée est possible pour cet usager qui possède cette carte à puce et pour ce programme, le boîtier décodeur (8) recevra alors les coefficients DC manquants des images I ainsi que toutes les autres informations permettant la visualisation du programme audiovisuel constituant la copie privée.

Selon un mode de réalisation particulier, la copie dite privée pourra permettre à l'usager de regarder ce même programme audiovisuel de façon illimitée ou un nombre de fois déterminée à l'avance par l'offreur du service qui a autorisé cette copie privée.

La présente invention concerne également le boîtier physique (8) utilisé par le consommateur pour accéder aux données. Ce boîtier physique est situé au domicile de l'utilisateur. Il fournit un ensemble de fonctionnalités qui gèrent l'information appropriée à présenter selon la sélection de l'audience et gère la connexion et la communication avec le serveur distant.

Selon un mode de réalisation particulier le boîtier physique correspondant à l'agencement d'interfaçage vidéo (8) est réalisé comme un dispositif autonome fixe avec disque dur intégré.

Selon un mode de réalisation particulier le boîtier physique correspondant à l'agencement d'interfaçage vidéo (8) est réalisé comme un dispositif autonome portable (mobile) avec disque dur intégré et/ou lecteur de disques (CD, DVD, etc.).

Selon un mode de réalisation particulier le boîtier physique autonome (8) comprend un lecteur de cartes à puce.

Selon un autre mode de réalisation particulier l'agencement d'interfaçage vidéo (8) est réalisé comme une carte additionnelle qui sera installée dans un ordinateur de type PC et sera reliée à au moins une interface de réseau de transmission et de diffusion large bande (4) et à au moins une interface de réseau de télécommunication (10). Cette carte utilisera le disque dur de l'ordinateur PC pour l'enregistrement du premier flux, mais comportera son propre calculateur et sa propre mémoire volatile de façon à ne pas laisser à l'utilisateur du PC mal intentionné le moyen d'accéder aux informations complémentaires comme les coefficients DC modifiés des images I du deuxième flux.

Selon la présente invention, les serveurs vidéo et multimédia (1) et/ou (12) comprennent des moyens de codage, de transcodage et de brouillage de données vidéo, en particulier des moyens d'ajouter des informations cryptographiques et de sécurité au début et tout au long des séquences.

Il est enfin à noter que l'invention dégrade le flux MPEG du point de vue visuel jusqu'à ne plus permettre la reconnaissance des scènes transmises et affichées sans avoir accès aux données et caractéristiques complémentaires, mais reconstitue totalement le flux MPEG dans l'agencement d'interfaçage vidéo (8) sans aucune perte.

Bien que la présente invention soit plus particulièrement axée sur les données audiovisuelles, il est entendu que toute information multimédia interactive et toutes données interactives peuvent être traitées par le présent agencement et le présent système, les données vidéo de type MPEG étant les plus élaborées. La présente invention sera mieux comprise grâce à la description suivante présentant la base physique de la présente invention et en référence à la figure 2 du dessin en annexe représentant un mode de réalisation préféré de cette dernière en tant qu'exemple non limitatif de réalisation particulièrement bien adaptée pour les réseaux câblés et de satellites. Le flux MPEG (101) complet est analysé par le dispositif d'analyse (121) du portail (12) et sera ainsi séparé en un flux de type MPEG mais dont les coefficients DC manquants des images I auront été traités et qui sera envoyé via la sortie (122) du portail vers le réseau de diffusion transmission large bande (4).

L'autre partie du flux MPEG modifié sera mémorisée dans la mémoire tampon (123) du portail (12). Pour chaque flux MPEG ainsi diffusé, le portail (12) conservera dans une mémoire tampon (123) les modifications qui auront été apportées à ce flux MPEG par l'analyseur (121) du portail (12). Il est précisé que, pour un même flux d'entrée MPEG (101) le traitement du flux peut être différent pour chaque utilisateur (8) et/ou pour chaque groupe d'utilisateurs (8). Ainsi, la mémoire tampon (123) du portail (12) comprend une zone de mémoire différente pour chaque utilisateur.

Dans les exemples réalisés, pour un premier utilisateur, chaque image I du flux MPEG est modifiée ; pour un deuxième utilisateur, certaines images I et certaines images P du flux MPEG sont modifiées ; dans le troisième exemple, le dispositif (8) est portable (mobile).

Décrivons maintenant en détail les différentes étapes pour ce premier utilisateur.

Le portail (121) a choisi le flux MPEG (101) qu'il va devoir envoyer à l'utilisateur (8) pour être regardé en différé sur son écran de télévision (6). Cet utilisateur est relié à un réseau câblé numérique de diffusion (4) et à un réseau de télécommunication ADSL (10).

Le système d'analyse (121) du portail (12) va donc lire le flux entrant MPEG (101) et, chaque fois qu'il détecte une image I, il la décompose en macroblocs (aussi en tranches - slices), puis en blocs. Cette analyse lui permet de reconnaître dans le code les coefficients DC, et de substituer certains d'entre eux par des valeurs aléatoires, afin de rendre les images (et par conséquent la séquence) illisibles du point de vue visuel humain. Les vraies valeurs des coefficients DC seront stockées dans le tampon de sortie (123), qui permettra plus tard la reconstitution de la séquence de départ dans le boîtier (8), en suivant le schéma inverse. Dans l'exemple réalisé, un macrobloc sur deux comporte un bloc (coefficient DC) modifié, tout en respectant l'égalité des fréquences de modification pour les six blocs d'un macrobloc.

Le système d'analyse (121) inscrit alors la valeur du coefficient substitué de l'image I modifiée dans le tampon (123). Le système d'analyse (121) continue son analyse jusqu'à la fin du flux d'entrée MPEG.

Le nouveau flux MPEG modifié est alors enregistré dans le tampon de sortie (122) pour être diffusé sur le réseau de diffusion (4) à travers la liaison (3). Les coefficients DC substitués des images I modifiées du flux MPEG entrant (101) sont mémorisés dans le tampon (123) du portail (12).

Pendant ce temps, et de façon totalement non synchronisée, le flux de sortie MPEG modifié en provenance du tampon de sortie (122) du portail (12) est diffusé via le réseau large bande (4) vers un ou plusieurs utilisateurs (8).

Chaque boîtier décodeur autorisé (8) qui souhaite enregistrer ce flux MPEG ainsi modifié peut alors lire ce flux MPEG et l'enregistrer sur son disque dur (85). Cette initiative d'enregistrement est laissée au décodeur (8) sous le contrôle du portail (12). Pour cela, le système d'analyse (121) avait inscrit au début du flux MPEG, une information de données supplémentaires qui précisait les destinataires de ce flux MPEG modifié. Les destinataires peuvent être ainsi un destinataire (8) particulier et lui seul, un groupe de destinataires (8) ou l'ensemble des décodeurs (8) reliés au réseau (4).

La phase décrite ci-dessus correspond à la première phase de préparation du flux MPEG par le portail (12), à sa transmission via le réseau large bande (4) et à son enregistrement dans un décodeur (8). Ce décodeur peut alors afficher ce flux MPEG enregistré dans son disque dur (85). Pour cela, le système de synthèse (87) du décodeur (8) va lire le fichier MPEG depuis son disque dur (85) et va l'envoyer vers un lecteur classique MPEG (81). Si aucune donnée complémentaire n'est reçue par le système de synthèse (87), alors le flux MPEG qui parvient au lecteur (81) est traité et affiché tel quel, ce qui provoque une distorsion importante de l'affichage sur l'écran de visualisation (6). En effet, les images I modifiées qui sont traitées par le système de synthèse (87) ne correspondent pas aux images I qui sont nécessaires pour une visualisation correcte, puisque certains coefficients de corrélation DC ont été substitués par des coefficients aléatoires. Par contre, comme le flux enregistré est bien un flux de type MPEG, le lecteur (81) ne fait aucune différence et affiche les informations sur l'écran de sortie (6) qui apparaissent bien comme des données d'un flux vidéo MPEG mais totalement incohérentes à l'être humain qui regarde l'écran (6). Toute copie du flux MPEG en provenance du disque dur (85) du boîtier (8) produira le même effet visuel lors de sa restitution par un lecteur MPEG quelconque ; toute utilisation de cette copie qui serait mal intentionnée est donc vouée à l'échec.

Lorsque l'usager du décodeur (8) veut réellement visualiser sur son écran (6) le programme audiovisuel enregistré sur son disque dur (85), il en fait la demande au système de synthèse (87) avec sa télécommande comme il le ferait avec un magnétoscope ou un lecteur de DVD présentant un menu sur son écran de télévision. Le système de synthèse (87) fait alors une requête au disque dur (85) et commence à analyser le flux MPEG modifié en provenance du disque dur (85) via le tampon de lecture (83). Le système de synthèse (87) établit alors une liaison avec le portail (12) via le réseau de télécommunication (10) qui est dans notre exemple une liaison DSL. Une fois cette liaison établie, et pendant toute la durée de visualisation du film ou du programme audiovisuel, le système de synthèse (87) fait parvenir de la mémoire tampon (123) du serveur (12) les coefficients de corrélation substitués et les données correspondant aux images I modifiées du flux enregistré sur le disque dur (85). Ces coefficients de corrélation et ces données de position parviennent au système de synthèse (87) via la mémoire tampon d'entrée (86) et sont stockés temporairement dans la mémoire volatile (88) du système de synthèse (87). A partir du flux MPEG modifié qui parvient via le tampon (83) et à partir des coefficients de corrélation et des données associées qui parviennent via le tampon (86) dans la mémoire (88), le système de synthèse (87) reconstitue de façon inverse au processus d'analyse décrit précédemment, les images I modifiées par les images I réelles et envoie le nouveau flux MPEG ainsi reconstitué vers le lecteur (81) pour être affiché correctement sur l'écran (6). Dès leur utilisation, les coefficients de corrélation à substituer et les données associées à ces images I sont effacés de la mémoire volatile (88).

Dans l'exemple réalisé, avant que le portail (12) n'autorise l'envoi des images I et des données associées depuis son tampon (123), le portail (12) a vérifié que l'utilisateur du boîtier (8) était bien autorisé à le faire. Pour cela, le portail (12) lit les informations contenues sur la carte à puce (82) du boîtier (8) et vérifie que cet utilisateur est bien autorisé à regarder ce programme audiovisuel. Ce n'est qu'après cette vérification, que les coefficients de corrélation et les données associées sont envoyés depuis le tampon (123) vers le boîtier (8) correspondant à cet utilisateur via le réseau (10).

Dans l'exemple réalisé, l'utilisateur a fait en plus une copie privée de son programme audiovisuel. Le système de synthèse (87) a donc inscrit dans une partie (84) du disque dur (85) des données complémentaires ainsi que le numéro de la carte à puce (82) et l'information « copie privée » comme données associées à ce programme audiovisuel. Lors de la prochaine lecture privée de ce programme audiovisuel, le système de synthèse (87) analysera ces données associées et informera ainsi le portail (12) que l'usager du décodeur (8) fait une lecture de la copie privée. Si cette fonction est autorisée pour cet utilisateur (8) par le portail (12), les coefficients de corrélation et les données associées seront alors envoyés par le portail (12) vers le tampon (86) comme décrit ci-dessus. Dans le cas contraire, les coefficients de corrélation et les données associées ne seront pas envoyés et l'utilisateur du décodeur (8) ne pourra pas regarder le flux MPEG reconstitué.

Décrivons maintenant en détail les différentes étapes pour le deuxième utilisateur (8).

Dans ce deuxième cas, le réseau de diffusion (4) est un réseau de satellites et le réseau de télécommunication (10) est un système de téléphonie cellulaire de faible bande passante de type GSM.

De façon identique à la description ci-dessus, l'utilisateur du décodeur (8) va recevoir les flux MPEG et les données complémentaires depuis le portail (12).

Par contre, dans l'exemple réalisé, au lieu de modifier chaque image I, le système d'analyse (121) ne prend qu'une image I sur n où n est un nombre aléatoire compris entre 1 et 12 et prend en compte des images P. Ainsi, avant l'envoi du flux MPEG à partir du tampon de sortie (122), le système d'analyse (121) va lire le flux d'entrée MPEG, (101) et après tirage du nombre aléatoire n, le système de synthèse modifie les coefficients de corrélation de la n-ième image I du flux MPEG. Après chaque image I ainsi modifiée, le système d'analyse (121) va faire un nouveau tirage d'un nombre n aléatoire. Chaque nombre aléatoire ainsi utilisé est enregistré dans le tampon (123) du portail (12). Pour les images P, le système d'analyse (121) prend en compte une image P sur m où m est un nombre aléatoire compris entre 1 et 5, dans une trame pour laquelle l'image I n'a pas été modifiée.

Le système d'analyse (121) du portail (12) lit le flux entrant MPEG (101) et, chaque fois qu'il détecte une n-ième image I ou une m-ième image P, il la décompose en macroblocs (aussi en tranches - slices), puis en blocs. Cette analyse lui permet de reconnaître dans le code les coefficients DC, et de substituer certains d'entre eux par des valeurs aléatoires, afin de rendre les images (et par conséquent la séquence) illisibles du point de vue visuel humain. Les vraies valeurs des coefficients DC seront stockées dans le tampon de sortie (123), qui permettra plus tard la reconstitution de la séquence de départ dans le boîtier (8), en suivant le schéma inverse.

De plus, dans ce deuxième exemple réalisé, tous les coefficients DC de cette chaque n-ième image I ne seront pas modifiés. Seul un macrobloc sur deux comporte un bloc (coefficient DC) modifié, tout en respectant l'égalité des fréquences de modification pour les six blocs d'un macrobloc. De plus, la substitution de chaque coefficient DC se fait par un coefficient DC calculé de façon aléatoire, mais sa valeur est comparée à la valeur du coefficient DC à substituer de façon à vérifier son écart. Si cet écart est trop faible, un autre nombre aléatoire est calculé de façon à augmenter l'écart entre le coefficient à substituer et le coefficient de substitution.

Il en est de même pour les images P.

Pour la reconstitution du flux MPEG, le décodeur (8) lit les tampons (86) et (87) et décode les éléments de données du train binaire, conformément à la syntaxe définie.

Lorsqu'il lit le train binaire, le décodeur identifie le début d'une image codée, puis le type de l'image. Il décode successivement chaque macrobloc de l'image. Le type de macrobloc et les vecteurs mouvement sont utilisés pour construire une prédiction du macrobloc courant, basée sur des images de référence antérieure et future qui ont été stockées dans le décodeur. Les données des coefficients sont décodées et déquantifiées. Chaque bloc 8x8 de données de coefficients est transformé par une DCT inverse. Le résultat est ajouté au signal de prédiction, avec une dynamique définie. Avant d'envoyer le flux MPEG au lecteur (81), le système de synthèse (87) remplace les coefficients DC des images I et P qui ont été substitués par ceux du flux provenant du tampon (86).

Lors de la reconstitution du flux MPEG par le système de synthèse (87) du décodeur (8), la lecture de ces nombres aléatoires et des coefficients de corrélation substitués depuis le tampon de sortie (123) du portail (12) et la lecture du flux MPEG ainsi modifié depuis le disque dur (85) du boîtier (8) permettent au système de synthèse (87) de reconstituer les images I et P et d'envoyer le tout au lecteur (81).

L'image est reconstruite par le lecteur (81) quand tous ces macroblocs ont été traités. S'il s'agit d'une image I ou d'une image P, elle constitue une image de référence pour les images subséquentes et elle est stockée à la place de l'ancienne image de référence. Avant leur affichage, il peut être nécessaire de réordonner les images, pour revenir de l'ordre de codage à l'ordre naturel d'affichage. Après avoir été réordonnées, les images sont disponibles, sous forme numérique, pour post-traitement et affichage, au gré de l'application.

Dans l'exemple réalisé pour cet utilisateur, il a été constaté que le deuxième flux demandait une bande passante inférieure à un pour mille de la bande passante nécessaire pour transmettre le flux MPEG de haute qualité, soit trois kilobits par seconde pour le deuxième flux vis-à-vis de trois megabits par seconde pour le premier flux MPEG.

Décrivons maintenant en détail les différentes étapes pour la troisième réalisation représentée par la figure 3.

Dans cette réalisation, le flux MPEG est traité par le système d'analyse (12) de la même manière que le flux MPEG de la deuxième réalisation.
Toutefois, le premier flux MPEG modifié est inscrit et enregistré sur un support physique (20) de type CD à partir de la mémoire tampon de sortie du système d'analyse (12).

Le deuxième flux est mémorisé dans le tampon (123) et est également enregistré en plus sur un support physique (10bis) de format carte de crédit, constitué par une carte à puce et une mémoire flash. Cette carte (10bis) sera lue par lecteur de carte (82) du dispositif (8). Le dispositif (8) est un système autonome, portable et mobile. Dans la réalisation, le dispositif (8) comprend le système de synthèse (87), le lecteur standard MPEG (81), les deux mémoires tampons (86) et (83) ainsi que le lecteur de disque (85).

Le dispositif (8) comprend en plus un écran intégré (6bis) de type écran plat qui permet à l'utilisateur de visionner directement ses programmes audiovisuels sur son dispositif (8) autonome.

Pour visualiser un programme audiovisuel de type MPEG, l'utilisateur du dispositif (8) introduit dans son lecteur de disque (85) un disque (20bis) de type (20) identique à celui enregistré par le système d'analyse (12). Ce disque (20bis) contient ainsi un flux MPEG de type premier flux, c'est-à-dire avec les coefficients DC de certaines images I et/ou P substitués.

L'utilisateur du dispositif (8) peut donc visualiser ce flux MPEG sur son écran (6bis) intégré à son dispositif. Toutefois, en raison de la substitution des coefficients DC, le flux MPEG ne sera pas correct du point de vue visuel. Pour rendre le flux correct visuellement, l'utilisateur introduit dans le lecteur de carte à puce (82) la carte mémoire (10bis) contenant le deuxième flux avec les coefficients DC. Le système de synthèse reconstitue alors le flux MPEG correct à partir du premier flux provenant du disque (20bis) et du deuxième flux provenant de la carte (10bis) connectée au lecteur (82).

Dans un agencement particulier, la carte à puce (10bis) contient également les applications et les algorithmes qui seront exécutés par le système de synthèse (87).

Dans un autre agencement particulier, la carte à puce (10bis) contient les données et les coefficients DC de plusieurs deuxième flux pour la reconstitution de plusieurs flux MPEG.

Dans un agencement particulier, le dispositif (8) comprend une liaison cellulaire vers un réseau GSM (10).

## Revendications

1. Procédé pour la distribution de séquences vidéos selon un format de flux nominal constitués par une succession d'images comprenant des images I correspondant à une image numérique complète I et des images P correspondant aux différences entre une image P et au moins une autre image I et/ou P, chaque image I ou P étant décomposée en macroblocs et en blocs, contenant des coefficients DCT, **caractérisé en ce que** l'on procède, avant la transmission à l'équipement client, à une analyse du flux pour générer un premier flux modifié, présentant le format d'un flux nominal, et présentant des images 1 modifiées par la substitution de certains coefficients DC des blocs DCT par des coefficients DC de même nature de telle sorte que ce premier flux est correct du point vue format MPEG, et un deuxième flux d'un format quelconque, comportant les coefficients DC substitués et les informations numériques aptes à permettre la reconstruction desdites images modifiées, puis à transmettre séparément les deux flux ainsi générés depuis le serveur vers l'équipement destinataire, et **en ce que** l'on calcule sur l'équipement destinataire une synthèse d'un flux au format nominal en fonction dudit premier flux et dudit deuxième flux.

2. Procédé pour la distribution de séquences vidéos selon la revendication 1, **caractérisé en ce que** chaque trame comprend au moins un bloc P correspondant aux différences entre une image appelée P et au moins une autre image I et/ou P.

3. Procédé pour la distribution de séquences vidéos selon la revendication 2, **caractérisé en ce qu'**au moins une image P est modifiée de la même façon que les images I.

4. Procédé pour la distribution de séquences vidéos selon l'une des revendications précédentes, **caractérisé en ce que** le format de flux nominal est défini par la norme MPEG-1 ou MPEG-2.

5. Procédé pour la distribution de séquences vidéos selon l'une des revendications précédentes, **caractérisé en ce que** ladite analyse peut décider des images I et/ou P à modifier.

6. Procédé pour la distribution de séquences vidéos selon l'une des revendications précédentes, **caractérisé en ce que** ladite analyse peut décider des coefficients DC à modifier.

7. Procédé pour la distribution de séquences vidéos selon l'une des revendications précédentes, **caractérisé en ce que** la transmission dudit premier flux est réalisée à travers un support matériel distribué physiquement [CD-ROM, disque dur, carte à mémoire flash].

8. Procédé pour la distribution de séquences vidéos selon l'une des revendications 1 à 6, **caractérisé en ce que** la transmission dudit premier flux est réalisée à travers un réseau large bande [câble, satellite, numérique hertzien, fibre optique, DSL (Digital Subscriber Line), BLR (boucle locale radio)] ou DAB [Digital Audio Broadcasting].

9. Procédé pour la distribution de séquences vidéos selon l'une des revendications 1 à 8, **caractérisé en ce que** la transmission dudit deuxième flux est réalisée à travers un réseau téléphonique commuté (RTC analogique ou numérique), ou à travers un réseau de type DSL (Digital Subscriber Line) ou à travers un réseau BLR (boucle locale radio) ou à travers un réseau téléphonique mobile utilisant les normes GSM, GPRS ou UMTS.

10. Procédé pour la distribution de séquences vidéos selon l'une des revendications 1 à 8, **caractérisé en ce que** la transmission dudit deuxième flux est réalisée à travers un support matériel distribué physiquement [carte à mémoire flash, carte à puce].

11. Procédé pour la distribution de séquences vidéos selon l'une des revendications 1 à 8, **caractérisé en ce que** la transmission dudit deuxième flux est réalisée à travers un réseau large bande de même type que le réseau utilisé par ledit premier flux.

12. Procédé pour la distribution de séquences vidéos selon l'une des revendications 1 à 8, **caractérisé en ce que** la transmission dudit deuxième flux est réalisée à travers le même réseau large bande que celui utilisé par ledit premier flux.

13. Procédé pour la distribution de séquences vidéos selon l'une des revendications précédentes, **caractérisé en ce que** la transmission d'au moins un des deux flux est chiffrée.

14. Procédé pour la distribution de séquences vidéos selon l'une des revendications précédentes, **caractérisé en ce qu'**au moins un des deux flux est tatoué [watermarké].

15. Procédé pour la distribution de séquences vidéos selon l'une des revendications précédentes, **caractérisé en ce que** les deux flux générés sont destinés à un seul équipement, à un groupe d'équipements ou à tous les équipements.

16. Procédé pour la distribution de séquences vidéos selon l'une des revendications précédentes, **caractérisé en ce que** la reconstruction est conditionnée par une transaction.

17. Procédé pour la distribution de séquences vidéos selon l'une des revendications précédentes, **caractérisé en ce que** la reconstruction peut être autorisée pour une consultation d'une copie privée demandée par le client.

18. Equipement pour la fabrication d'un flux vidéo en vue de la mise en oeuvre du procédé selon la revendication 1, comportant au moins un serveur multimédia contenant les séquences vidéos originelles et **caractérisé en ce qu'**il comporte un dispositif d'analyse du flux vidéo provenant dudit serveur pour générer les deux flux.

19. Equipement pour la fabrication d'un flux vidéo selon la revendication 18, **caractérisé en ce qu'**il comporte une mémoire pour l'enregistrement d'un marqueur « copie privée » indiquant pour chaque séquence les droits de chaque utilisateur : copie privée pouvant être regardée un nombre illimité de fois, copie privée pouvant être regardée un nombre limité de fois et quel nombre, copie privée interdite.

20. Equipement pour l'exploitation d'un flux vidéo en vue de la mise en oeuvre du procédé selon la revendication 1, comprenant un décodeur standard de flux, au moins une interface d'enregistrement [disque dur] destiné à stocker le contenu dudit premier flux et au moins une interface d'affichage **caractérisé en ce qu'**il comporte un moyen pour la recomposition du flux originel à partir des deux flux.

21. Equipement pour l'exploitation d'un flux vidéo selon la revendication 20, **caractérisé en ce que** ledit moyen est une application logicielle installée sur l'équipement.

22. Equipement pour l'exploitation d'un flux vidéo selon la revendication 20, **caractérisé en ce que** ledit moyen est une application logicielle installée sur une carte à puce.

23. Equipement pour l'exploitation d'un flux vidéo selon la revendication 20, **caractérisé en ce que** ledit moyen est un dispositif électronique.

24. Equipement pour l'exploitation d'un flux vidéo selon l'une des revendications 20 à 23, **caractérisé en ce que** dans le cas de l'installation sur un ordinateur, ledit moyen utilise une ressource spécifique au produit [carte] afin d'éviter la copie de l'information temporaire sur un support permanent.

25. Equipement pour l'exploitation d'un flux vidéo selon l'une des revendications 20 à 24, **caractérisé en ce que** ladite interface d'enregistrement stocke aussi un marqueur « copie privée » en relation avec ledit premier flux indiquant pour cette séquence les droits de l'utilisateur : copie privée pouvant être regardée un nombre illimité de fois, copie privée pouvant être regardée un nombre limité de fois et quel nombre, copie privée interdite.

26. Equipement pour l'exploitation d'un flux vidéo selon l'une des revendications 20 à 25, **caractérisé en ce qu'**il comprend un lecteur de cartes à puce permettant d'identifier le client quand il veut visualiser un programme audiovisuel enregistré sur son disque dur.

27. Système pour la transmission d'un flux vidéo comprenant un équipement de production d'un flux vidéo selon l'une quelconque des revendications 18 à 19, au moins un équipement d'exploitation d'un flux vidéo selon l'une quelconque des revendications 20 à 26 et au moins un réseau de communication entre l'équipement de production et le(s) équipement(s) d'exploitation.

## Claims

1. A method for distributing video sequences according to a nominal stream format including a succession of frames, each comprising I frames corresponding to a complete digital I frame and P frames corresponding to the difference between one P frame and at least another I frame or P/B frame, each I frame or P frame being broken down into blocks and macroblocks containing DCT coefficients, **characterized in that** one proceed, before the transmission to a client equipment, with an analysis of the stream to generate a modified stream, having the format of the nominal stream, and having modified I frames by the substitution of some DC of the DCT blocks by DC coefficients of the same nature so that the first stream is compliantwith MPEG format, and a second stream of any format, comprising the substituted DC coefficients and digital information allowing the reconstruction of said modified frames, and to transmit separately both generated streams from the server toward the client equipment, and **in that** one calculate on the client equipment a synthesis of a stream of the nominal format as function of said first and said second stream.

2. The method according to claim 1, **characterized in that** each frame comprises at least one P block corresponding to differences between a frame referred to as a P frame and at least one other I and/or P frame.

3. The method according to claim 2, **characterized in that** at least one P frame is modified in the same manner as the I frames.

4. The method according to anyone of the preceding claims, **characterized in that** the nominal stream format is defined by a MPEG-1 or MPEG-2 standard.

5. The method according to anyone of the preceding claims, **characterized in that** the analysis can determine which I and/or P frames to modify.

6. The method according to anyone of the preceding claims, **characterized in that** analysis can determine the DC correlation coefficients to modify.

7. The method according to anyone of the preceding claims, **characterized in that** transmission of the first stream is implemented via a physically distributed material support (CD-ROM, hard drive, flash memory card).

8. The method according to claim 1, **characterized in that** transmission of the first stream is implemented via a broad band network (cable, satellite, optical fiber, airwaves, DSL), LLR (local radio loop) or DAB (Digital Audio Broadcasting).

9. The method according to one of the claims 1 to 8, **characterized in that** the transmission of the second stream is implemented via a switched telephonic network (STN digital or analogue) or via a DSL type network (Digital Subscriber Line) or via a LRL network (local radio loop) or via a mobile telephonic network using GSM, GPRS or UMTS standards.

10. The method according to one of the claims 1 to 8, **characterized in that** transmission of the second stream is performed via a physically distributed material support (Flash memory card, smartcard).

11. The method according to one of the claims 1 to 8, **characterized in that** transmission of the second stream is implemented via a broad band network of the same type as the network used for the first stream.

12. The method according to one of the claims 1 to 8, **characterized in that** transmission of the broad band stream is implemented via the same broad band network as the network used for the first stream.

13. The method according to anyone of the preceding claims, **characterized in that** transmission of at least one of the two streams is encrypted.

14. The method according to claim 1, **characterized in that** at least one of the two streams is watermarked.

15. The method according to anyone of the preceding claims, **characterized in that** the two generated streams are intended for a client equipment, a group of client equipments or all client equipments.

16. The method according to anyone of the preceding claims, **characterized in that** reconstruction is contingent on a transaction.

17. The method according to anyone of the preceding claims, **characterized in that** reconstruction can be authorized by consultation of a private copy requested by the client.

18. Apparatus for producing a video stream according to the method of claim 1, comprising at least one multimedia server containing original video sequences and **characterized in that** it comprises a equipment for analysing the video stream originating from the server for generating the first and second streams.

19. The apparatus for producing a video stream according to claim 18, **characterized in that** it comprises a memory for recording a "private copy" marker indicating for each sequence the user's rights : private copy that can be watched an unlimited number of times, private copy that can be watched a limited number of times and specification of
that number, and private copy prohibited.

20. Apparatus for exploiting a video stream carrying out the method of claim 1, comprising a standard stream decoder, at least one recording interface (hard drive) intended for storing the content of the first stream and at least one display interface, and a means for reconstituting the original stream from the first and second streams.

21. Apparatus for exploiting a video stream according to claim 20, **characterized in that** said reconstituting means is a software program loaded into the equipment.

22. Apparatus for exploiting a video stream according to claim 20, **characterized in that** said means is a software program loaded on a smart card.

23. Apparatus for exploiting a video stream according to claim 20, **characterized in that** the reconstituting means is an electronic equipment.

24. Apparatus for exploiting a video stream according to one of the claims 20 to 23, **characterized in that**, in the case of installation on a computer, said reconstituting means uses a resource specific to the product (card) to prevent copying of temporary information on a permanent support.

25. Apparatus for exploiting a video stream according to one of the claims 20 to 24, **characterized in that** the recording interface also stores a "private copy" marker in relation to the first stream indicating for this sequence the user's rights : private copy that can be watched an unlimited number of times, private copy that can be watched a limited number of times and specification of
that number, and private copy prohibited.

26. Apparatus for exploiting a video stream according to one of the claims 20 to 25, **characterized in that** it comprises a smart card reader enabling identification of a client to display an audiovisual program recorded on the hard drive.

27. A system for transmitting a video stream comprising the production apparatus according to anyone of the claims 18 to 19, at least one equipment unit for exploiting a video stream according to anyone of the claims 20 to 26, and at least one communication network between the production equipment and the exploitation equipment unit(s).

## Patentansprüche

1. Verfahren zum Senden von Videosequenzen in einem üblichen kontinuierlichen Übertragungsformat, bestehend aus einer Folge von Bildern mit Bildern I entsprechend einem vollständigen digitalen Bild I und Bildern P entsprechend den Unterschieden zwischen einem Bild P und mindestens einem anderen Bild I und/oder P, wobei jedes Bild I oder P in Makroblöcken und in Blöcke zerlegt wird, die DCT-Koeffizienten enthalten, **dadurch gekennzeichnet, dass** vor der Übertragung an die Client-Einrichtung eine Analyse des Stroms erfolgt, um einen ersten veränderten Strom zu erzeugen, mit dem Format eines Nennstroms, mit Bildern I, die durch die Ersetzung von bestimmten DC-Koeffizienten der DCT-Blöcke durch DC-Koeffizienten derselben Art verändert wurden, so dass dieser erste Strom vom MPEG-Format her korrekt ist, und einen zweiten Strom in einem beliebigen Format, mit den ersetzten DC-Koeffizienten und den geeigneten digitalen Informationen zur Rekonstruktion der besagten veränderten Bilder und um dann getrennt die beiden so erzeugten Ströme vom Server an die Empfängereinrichtung zu übertragen, sowie dadurch, dass in der Empfängereinrichtung eine Synthese eines Stroms im Nennformat in Abhängigkeit von dem ersten Strom und dem genannten zweiten Strom berechnet wird.

2. Verfahren zum Senden von Videosequenzen nach Anspruch 1, **dadurch gekennzeichnet, dass** jeder Datenübertragungsblock mindestens einen Block P umfasst, entsprechend den Unterschieden zwischen einem genannten Bild P und mindestens einem anderen Bild I und/oder P.

3. Verfahren zum Senden von Videosequenzen nach Anspruch 2, **dadurch gekennzeichnet, dass** mindestens ein Bild P auf die gleiche Weise wie die Bilder I verändert wird.

4. Verfahren zum Senden von Videosequenzen nach einem der vorhergehenden Ansprüche, **dadurch gekennzeichnet, dass** das nominale Stream-Format durch die Norm MPEG-1 oder MPEG-2 definiert ist.

5. Verfahren zum Senden von Videosequenzen nach einem der vorhergehenden Ansprüche, **dadurch gekennzeichnet, dass** die Analyse Bilder I und/oder P bestimmen kann, die zu verändern sind.

6. Verfahren zum Senden von Videosequenzen nach einem der vorhergehenden Ansprüche, **dadurch gekennzeichnet, dass** die Analyse DC-Koeffizienten bestimmen kann, die zu verändern sind.

7. Verfahren zum Senden von Videosequenzen nach einem der vorhergehenden Ansprüche, **dadurch gekennzeichnet, dass** die Übertragung des genannten ersten Stromes durch einen physisch übermittelten Träger erfolgt [CD-ROM, Festplatte, Flash-Speicherkarte].

8. Verfahren zum Senden von Videosequenzen nach einem der Ansprüche 1 bis 6, **dadurch gekennzeichnet, dass** die Übertragung des genannten ersten Stroms über ein Breitbandnetz erfolgt [Kabel, Satellit, digital terrestrisch, Glasfaser, DSL (Digital Subscriber Line), WLL (Wireless Local Loop) oder DAB (Digital Audio Broadcasting)].

9. Verfahren zum Senden von Videosequenzen nach einem der Ansprüche 1 bis 8, **dadurch gekennzeichnet, dass** die Übertragung des genannten zweiten Stroms über ein Telefonnetz (analog oder digital) erfolgt, oder über ein DSL-Netz (Digital Subscriber Line) oder ein WLL-Netz (Wireless Local Loop) oder ein Mobilfunknetz, das die Normen GSM, GPRS oder UMTS benutzt.

10. Verfahren zum Senden von Videosequenzen nach einem der Ansprüche 1 bis 8, **dadurch gekennzeichnet, dass** die Übertragung des genannten zweiten Stroms durch einen physisch übermittelten Träger erfolgt [Flash-Speicherkarte, Chipkarte].

11. Verfahren zum Senden von Videosequenzen nach einem der Ansprüche 1 bis 8, **dadurch gekennzeichnet, dass** die Übertragung des genannten zweiten Stroms durch ein Breitbandnetz derselben Art wie das vom ersten Strom benutzte erfolgt.

12. Verfahren zum Senden von Videosequenzen nach einem der Ansprüche 1 bis 8, **dadurch gekennzeichnet, dass** die Übertragung des genannten zweiten Stroms über dasselbe Breitbandnetz erfolgt wie beim ersten Strom.

13. Verfahren zum Senden von Videosequenzen nach einem der vorhergehenden Ansprüche, **dadurch gekennzeichnet, dass** die Übertragung mindestens einer der beiden Ströme chiffriert ist.

14. Verfahren zum Senden von Videosequenzen nach einem der vorhergehenden Ansprüche, **dadurch gekennzeichnet, dass** mindestens einer der beiden Ströme ein digitales Wasserzeichen hat.

15. Verfahren zum Senden von Videosequenzen nach einem der vorhergehenden Ansprüche, **dadurch gekennzeichnet, dass** die beiden erzeugten Ströme für einen einzige Einrichtung, eine Gruppe von Einrichtungen oder alle Einrichtungen bestimmt sind.

16. Verfahren zum Senden von Videosequenzen nach einem der vorhergehenden Ansprüche, **dadurch gekennzeichnet, dass** die Rekonstruktion an eine Transaktion gebunden ist.

17. Verfahren zum Senden von Videosequenzen nach einem der vorhergehenden Ansprüche, **dadurch gekennzeichnet, dass** die Rekonstruktion für eine Konsultation einer vom Kunden erbetenen privaten Kopie genehmigt werden kann.

18. Einrichtung zur Erzeugung eines Videostroms zur Durchführung des Verfahrens nach Anspruch 1, mit mindestens einem Multimedia-Server, der die originalen Videosequenzen enthält, und **dadurch gekennzeichnet, dass** sie eine Analysevorrichtung für den Videostrom umfasst, der von dem Server kommt, um die beiden Ströme zu erzeugen.

19. Einrichtung zur Erzeugung eines Videostroms nach Anspruch 18, **dadurch gekennzeichnet, dass** es einen Speicher für die Registrierung einer Kennzeichnung «Privatkopie» umfasst, die für jede Sequenz die Rechte jedes Benutzers angibt: Privatkopie, die unbegrenzt oft angesehen werden kann, Privatkopie, die begrenzt oft angesehen werden kann sowie wie oft, und verbotene Privatkopie.

20. Einrichtung zur Auswertung eines Videostroms zur Durchführung des Verfahrens nach Anspruch 1, mit einem Standard-Stromdecoder, mindestens einer Registrierungsschnittstelle [Festplatte], um den Inhalt des genannten ersten Stroms zu speichern, und mindestens einer Anzeigeschnittstelle, **dadurch gekennzeichnet, dass** sie ein Mittel zum Wiederherstellen des originalen Stroms aus den zwei Strömen umfasst.

21. Einrichtung zur Auswertung eines Videostroms nach Anspruch 20, **dadurch gekennzeichnet, dass** besagtes Mittel eine in der Einrichtung installierte Softwareanwendung ist.

22. Einrichtung zur Auswertung eines Videostroms nach Anspruch 20, **dadurch gekennzeichnet, dass** besagtes Mittel eine auf einer Chipkarte installierte Softwareanwendung ist.

23. Einrichtung zur Auswertung eines Videostroms nach Anspruch 20, **dadurch gekennzeichnet, dass** besagtes Mittel eine elektronische Vorrichtung ist.

24. Einrichtung zur Auswertung eines Videostroms nach einem der Ansprüche 20 bis 23, **dadurch gekennzeichnet, dass** bei Installation in einem Computer das Mittel eine spezifische Hilfsquelle für das Produkt [Karte] benutzt, um die zeitweise Kopie der Information auf einen Dauerträger zu vermeiden.

25. Einrichtung zur Auswertung eines Videostroms nach einem der Ansprüche 20 bis 24, **dadurch gekennzeichnet, dass** besagte Registrierungsschnittstelle auch eine Kennzeichnung «Privatkopie» in Zusammenhang mit dem ersten Strom speichert, der für diese Sequenz die Rechte des Benutzers angibt: Privatkopie, die unbegrenzt oft angesehen werden kann, Privatkopie, die begrenzt oft angesehen werden kann sowie wie oft, und verbotene Privatkopie.

26. Einrichtung zur Auswertung eines Videostroms nach einem der Ansprüche 20 bis 25, **dadurch gekennzeichnet, dass** es einen Kartenabfühler mit Mikrochip umfasst, wodurch es möglich wird, den Kunden zu identifizieren, wenn er ein auf seiner Festplatte registriertes audiovisuelles Programm visualisieren will.

27. System zur Übertragung eines Videostroms mit einer Einrichtung zur Erzeugung eines Videostroms nach einem beliebigen der Patentansprüche 18 bis 19, mindestens einer Einrichtung zur Auswertung eines Videostroms nach einem beliebigen der Patentansprüche 20 bis 26 und mindestens einem Kommunikationsnetz zwischen der Produktionseinrichtung und der/den Auswertungseinrichtung(en).
